# EUROPEAN PATENT SPECIFICATION

(11) **EP 2 244 324 B1**
(45) Date of publication and mention of the grant of the patent: **27.11.2013**
(21) Application number: 09169517.1
(22) Date of filing: 04.09.2009
(51) Int. Cl.: H01M 8/02, C01B 3/02, C25B 9/04, H01M 8/00, C25B 15/08, H01M 8/10

(54) **Cambered Flow-field Plate**
Bombierte Gasverteilerfeldplatte
Plaque bombée du distributeur de Gaz

(30) Priority: 20.04.2009 DE 102009017779
(43) Date of publication of application: 27.10.2010
(73) Proprietor: Ritter Elektronik GmbH, 42897 Remscheid (DE); Fachhochschule Gelsenkirchen, 45877 Gelsenkirchen (DE); Propuls GmbH, 46240 Bottrop (DE); Gräbener Maschinentechnik GmbH & Co. KG, 57250 Netphen - Werthenbach (DE)
(72) Inventor: Gräbener, Theodor R., Dr., 57234 Wilnsdorf (DE); Fritz, Werner, Dr., 76297 Stutensee (DE); Kapp, Dieter, 57234, Wilnsdorf (DE)
(74) Representative: KNH Patentanwälte

(56) References cited:
- JP-A- 2006 004 754
- JP-A- 2006 173 090
- JP-A- 2007 134 202
- JP-A- 2007 179 789
- US-A- 6 010 317
- US-A1- 2002 022 382

## Description

The invention relates to a fuel cell or a reformer cell according to claim 1.

Fuel cells are devices for converting energy of a chemical reaction into electricity. When operating, a fuel and an oxidant are steadily supplied to the cell. Fuel and oxidant react in the presence of an electrolyte, such that the cell produces electrical current at its anode side and outputs a reaction product at its cathode. A single conventional fuel cell typically produces a low voltage, i.e. typically in the range from 0.5 Volts to 1.2 Volts, at a comparatively high current, wherein the current depends on the size of the reaction area, i.e. theoretically up to 3 Amperes per square centimetre (3A/cm²) of active area in the cell. As the active area, i.e. the area of the membrane electrode assembly in a modern fuel cell, may easily exceed an area of 100cm², a single cell theoretically may output a current of up to 300 A at a low voltage of typically below 1.0 Volts. Technically these high currents at a low voltage are difficult to handle, since the voltage of one fuel cell is to low for modern applications.

For generating higher voltages in conventional fuel cell systems a plurality of cells are connected in series, the voltages of the cells thus adding. Further to being electrically coupled the cells are connected in series with respect to the supply of fuel and an oxidant, the draining fuel line of one cell being the supply line of a next cell. Similarly the fuel cells may be connected in series with respect to the oxidant.

Conventional fuel cells typically are of flat, planar shape and in many cases exhibit a rectangular shape. Conventionally a serial connection of a plurality of fuel cells forms a stack, wherein the flat fuel cells are stacked one upon another thus forming a cuboid having the footprint of a single fuel cell and the height corresponding to the number of stacked fuel cells. Said stack of fuel cells thus forms an easy to handle plurality of fuel cells providing a high output current at a convenient voltage. The fuel cells of said stack conventionally are firmly connected in order to apply a mechanical pressure onto the fuel cells and in order to provide a sufficient mechanical strength to the components of fuel cells, i.e. the membrane and gas diffusion layers.

In order to remove one of the fuel cells from the stack, for example in case of a defect, the corresponding electrical lines and supply lines have to be disconnected and the mechanical fixing of the stack must be unlocked. Accordingly removing of a single cell from the stack causes a comparatively high effort. Furthermore the number of fuel cells cannot be adapted as desired without considerable effort, since the electrical couplings and supply lines have to be adjusted to any change in the number of fuel cells. As a consequence stacks of fuel cells typically are available comprising a predefined and nearly unchangeable number of cells.

In conventional stacks of fuel cells the stacking of the cells is also conveniently used for applying a mechanical pressure onto the sidewalls of each fuel cell, which effectuates the flow-field plates of a fuel cell being pressed against a gas diffusion layer, thus lowering the ohmic contact resistance for dissipating the produced current. Accordingly said pressure is desired for enabling or at least improving the operation of the cells as described in more detail below. However, it is a trade-off between providing a high mechanical pressure on a fuel cell for allowing a good ohmic contact and destroying a cell by said pressure.

Consequently an alternative solution for applying a contact pressure from the flow-field plates on the gas diffusion layers is desired.

JP 2006 173 090 discloses a stack of fuel cells, wherein the fuel cells are electrically and also with regard to the supply of fuel and oxidant connected in series. Each fuel cell exhibits a quadrangular outer shape and comprises two flow field plates of electrically conducting material, which form the outer face of a fuel cell. In the stack the flow field plates of two adjoining fuel cells are pressed upon each other, thus achieving the electrical serial coupling. The flow field plates exhibit a cambering, which results from press work when producing the plates from flat stock. In each fuel cell the flow field plates are arranged with opposing convex curvature.

US 6010317 A discloses a fuel all comprising a cambered flow-field plate having a non-cambered circumferential boundary area.

### Brief description of the figures

In the following the invention is disclosed with respect to the accompanying figures, wherein
- Fig. 1: depicts a schematic cross sectional view through a fuel cell;
- Figs. 2a, 2b: depicts a schematic front view and a cross sectional view of a flow-field plate;
- Figs.3a, 3b: depict a fuel cell before and after assembly.

The following description particularly relates to fuel cells. However, since a reformer cell, which can be considered as a reverse fuel cell, may have a very similar design as the described embodiments of fuel cells, the invention as described below is not limited to a fuel cell, but can be applied to a flow-field plate of a reformer cell analogously. Hence, the invention relates to and is disclosed for a flow-field plate usable in a fuel cell or a reformer cell.

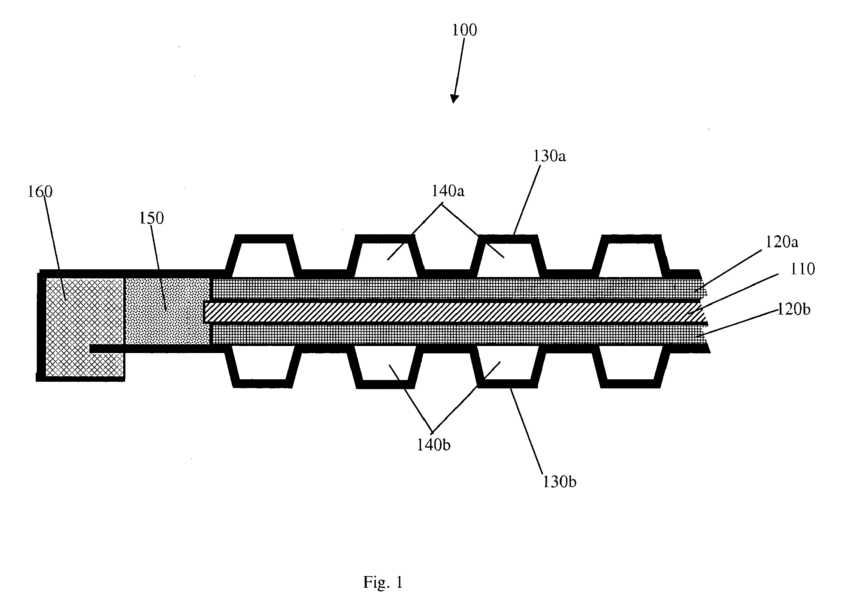

Figure 1 schematically depicts a cross sectional view of a fuel cell 100, wherein the depicted fuel cell may be of any arbitrary fuel cell type. In order to elucidate the technical background of the invention, the described embodiment relates to any fuel cell comprising a membrane electrode assembly, abbreviated as MEA, and at least one gas diffusion layer, abbreviated GDL, and a pair of flow-field plates surrounding these layers. Generally the fuel cell may be a low temperature or high temperature fuel cell comprising a proton exchange membrane (PEM). The fuel cell may be fuelled by hydrogen and oxygen or air, i.e. the oxygen from the air; or the fuel cell may be a so-called direct methanol fuel cell (DMFC), which is fuelled by methanol and oxygen, or the oxygen comprised in the air; or the fuel cell may be of any other type.

The depicted fuel cell comprises a proton exchange membrane 110, which adjoins at both of its sides to gas diffusion layers (GDLs) 120a, 120b, which in turn adjoin to a first flow-field plate 130a and a second flow-field plate 130b at their outer faces.

The proton exchange membrane is a semi permeable membrane allowing the ions to pass from the anode side through the membrane to the cathode, where the ions combine with the oxidant. In operation, for example when considering a so-called proton exchange membrane fuel cell (PEMFC), the cell is fuelled with hydrogen and air, wherein hydrogen is supplied to the anode side and oxygen or air as oxidant is supplied to the cathode side. Note that PEM in some literature abbreviates "polymer electrolyte membrane", wherein said membrane fulfils the purpose of the semi-permeable membrane.

In the depicted embodiment flow-field plates 130a, 130b serve as anode and cathode, i.e. for collecting the electrons produced by ionizing the fuel and conducting electrical current. Plates 130a and 130b accordingly may have electrical connectors for connecting the cell to an electric circuit. However, in one embodiment - not shown in this description - the anode and cathode may be implemented as a layer of conducting material applied on the faces of membrane 110, the anode and cathode having an electrical coupling to the outside of the cell.

When the fuel, i.e. the hydrogen, is ionized at the anode side of membrane, the resulting electrons are captured by the anode and the hydrogen ions, i.e. protons, travel through membrane 110 to the cathode side of the membrane, where they combine with the supplied oxidant, i.e. oxygen or oxygen as contained in air in the case of hydrogen as fuel, to produce water. Said reaction is accelerated by a catalyst, which in one embodiment may be applied as a coating to the membrane, said membrane comprising at least one layer of catalyst at the anode side, optionally another layer of catalyst on the cathode side of the membrane.

As illustrated, membrane 110 is covered at both sides by gas diffusion layers (GDLs) 120a, 120b. The gas diffusion layers help to manage the produced water on the cathode side, since a fuel cell allows an appropriate amount of water to contact membrane 110 to keep that humidified. In addition, the GDLs promote the exit of water from the cathode to help eliminate flooding of the cell, which would stop any operation of the cell. Since the GDLs separate the membrane, where the fuel is split and the electrons are produced, from flow-field plates 130a, 130b, which serve as electrodes in the depicted embodiment, the GDLs must enable a transport of the electrons to electrodes. The gas diffusion layers accordingly must electrically couple the electrodes to the membrane, particularly to the catalyst on the membrane. To reduce the electrical resistance between anode and cathode, i.e. between the flow-field plates over GDLs and membrane, a contact pressure of the flow-field plates onto the GDLs is required.

Furthermore, the gas diffusion layers must couple the membrane to the flow-field plates thermally for dissipating heat, which is produced when ionizing the fuel. Since a maximum temperature of a fuel cell must not be exceeded in order to prevent damaging of the fuel cell, and furthermore for controlling the temperature of the fuel cell to an optimum operating temperature, the gas diffusion layers also serve as a thermal coupling between membrane 110 and flow-field plates 130a, 130b. Similar as described above for the electrical coupling, the thermal coupling requires at least a minimum contact pressure of the flow-field plates 130a, 130b to the gas diffusion layers 120a, 120b and the membrane 110.

A contact pressure between the flow-field plates and the gas diffusion layers furthermore is required in order to force the flow of gases through the flow field channels 140a, 140b. The fuel and the oxidant, i.e. gasiform hydrogen and air or gasiform oxygen in this embodiment, are supplied to the fuel cell through openings - not shown in fig. 1 - in the flow-field plates. Both the fuel and the oxidant then either travel through the channels 140a, 140b of the flow field in the flow-field plates until it reaches the respective outlet opening at the end of the flow-field channels or they travel through the gas diffusion layer to the membrane where the fuel is ionized on the anode side and the oxidant combines with the ionized fuel ions on the cathode side. However for an effective operation of the fuel cell, a flow of fuel or oxidant taking a shortcut from the inlet to the outlet without travelling through the channels but bypassing the barriers separating the channels is undesirable.

Hence, there is a need for the flow-field plates to apply a contact pressure onto the gas diffusion layers, or more generally speaking, on the inner volume of the cell.

For applying a contact pressure at least one of the opposing flow-field plates exhibits a cambering in its relaxed state, the flow-field plate thus exhibiting a three dimensional curvature, which produces a contact pressure on the inner volume of the cell in its assembled state.

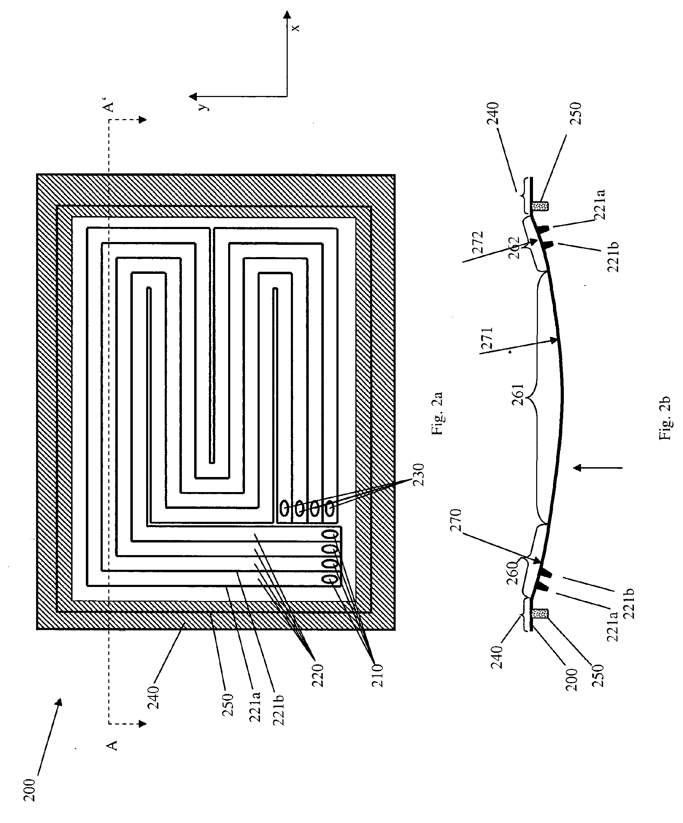

Figures 2a, 2b depict an embodiment of flow-field plate 200, wherein fig. 2a depicts a front view of a flow-field plate and fig. 2b depicts a cross sectional view along cut line A - A'. Flow-field plate 200 may be considered as one embodiment of plate 130a, 130b as of fig. 1, i.e. the plate may be suitable for the anode and the cathode side.

Note that the fuel cell in one embodiment may have a square or quadrangular shape as depicted. However, the fuel cell may have any arbitrary shape including any rounded or circular shape.

Flow-field plate 200 as depicted in fig. 2a exhibits at least one inlet opening 210 for supplying fuel or oxidant and at least one channel for conducting fuel or oxidant. The openings 210 lead into channels 220, which conduct the fuel/oxidant to the at least one outlet opening 230.

The plurality of meandering channels 220, i.e. the flow-field, optionally may be surrounded by a circumferential boundary area 240, which in the figure is depicted as the dashed area. Boundary area 240 in one embodiment may be used for connecting two flow-field plates or for applying the cell into an attachment, wherein the attachment touches the boundary area only. On said boundary area 240 at least one circumferential sealing means 250 may be applied.

Fig. 2b depicts a cross sectional view along cut line A - A' through flow-field plate 200 exhibiting a cambering at least in x-direction. The flow-field plate in x-direction accordingly forms a curvature. Since the material of the flow-field plate is flexible and due to the pulling of the boundary area to an opposing plate, the flow-field plate will exhibit a contact pressure on its opposing plate as it is deformed on assembly of the fuel cell. In this way the cambering of the flow-field plate effectuates a desired contact pressure onto an opposing plate.

Note that the flow-field plate may also exhibit a cambering in the y-direction.

In one embodiment the boundary area 240 may not exhibit any cambering, but instead is plain flat, such that it does not effectuate a contact pressure. Said boundary area in one embodiment may be used to mechanically join opposing flow-field plates.

Note that the cambering of the flow-field plate may not be uniform across the surface area of the plate. Instead the cambering may have any three-dimensional structure, wherein said three-dimensional structure may depend on the design of the flow-field, the material of the flow-field plate, the desired contact pressure and other factors. In one embodiment the cambering may be modelled and calculated using a finite-element modelling and calculation.

Due to the cambering the flow-field plate exhibits a curvature in the cambered area, i.e. except the circumferential boundary area 240. As illustrated the curvature is nonuniform across the cambered area. In the depicted embodiment section 260 exhibits a cambering different from that of section 261, which in turn is different from the curvature of section 262.

Said different cambering of areas of the flow-field plate in one embodiment may depend on the design of the flow-field. Due to the structuring of the gas flow channels in the flow-field, the channel sidewalls 221 a, 221 b effectuate a reinforcement of the flow-field plate in the direction of the channels, whereas they have a much smaller reinforcement effect when bending the plate perpendicular to the direction of the channel sidewalls. Consequently, since the cambering of the flow-field plate in sections 260 and 262 respectively is perpendicular to the direction of the gas flow channels, i.e. perpendicular to the correlated sidewalls 221 a and 221 b respectively, the cambering results in first curvature radius R1 as illustrated by arrows 270, 272. Curvature radius R1 differs from curvature radius R2 as illustrated by arrow 271, since the cambering of section 261 is parallel to the direction of the gas flow channels, i.e. parallel to the direction of the corresponding channel sidewalls.

The curvature of the plate also depends on specifics of the material used, particularly on the rigidity of the material. In one embodiment the flow-field plate may be produced from steel, particularly from corrosive-resistant steel. In alternative embodiments the flow-field plate may exhibit a layered structure comprising at least two layers of material. In one alternative embodiment, the flow-field plate may comprise a layer of steel and a layer of nickel on the flow-field side of the plate. The steel layer essentially may provide the mechanical properties of the flow-field plate such as the mechanical stability, rigidity and the geometrical shape of the plate including the flow-field. Said steel layer is then nickelized during production, such that the steel layer receives a nickel coating at least on its flow-field side. In a second alternative embodiment the flow-field plate may comprise a layer for improving electrical conductivity of the plate, i.e. a layer of copper. Said layer may be applied to the outside of the plate and/or below the optional nickel layer at the flow-field side of the plate. In still another alternative the flow-field plate may be produced from graphite or may comprise a layer of graphite for incorporating graphite specific properties into the flow-field plate.

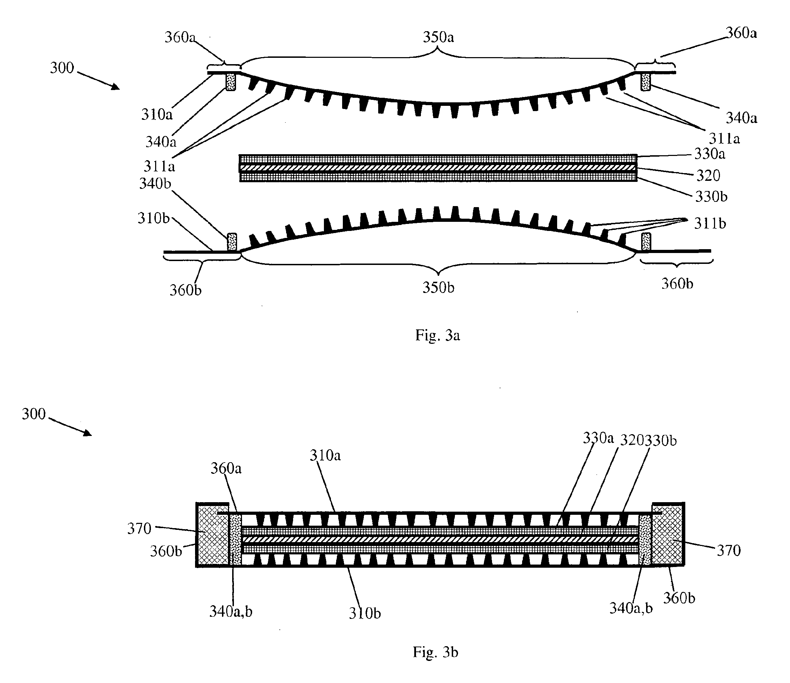

Figures 3a and 3b schematically depict a fuel cell 300, wherein fig. 3a depicts the flow-field plates 310a and 310b in their relaxed position, i.e. before assembling the cell. Cell 300 may furthermore comprise a semi-permeable membrane 320 as well as first and second gas diffusion layers 330a, 330b as described above with reference to fig. 1.

Flow-field plates 310a and 310b exhibit a cambering effectuating a curvature in their relaxed state, wherein the curvature of the two opposing plates may be mirror-inverted as depicted in the figure. However, the invention may not be limited in this regard. In one alternative embodiment - not shown - only one of the two facing flow-field plates may be cambered as described above, whereas the residual plate is plain flat and advantageously stiff and non-deformable in order to resist a contact pressure caused by the cambering of the opposing flow field plate.

Flow-field plates 310a, 310b exhibit a flow-field and corresponding channel sidewalls 311 a and 311 b respectively. Optionally on at least one of the flow-field plates a sealing means 340a, 340b may be applied before the cell is assembled, wherein said sealing means seals the inner volume of the cell against its surrounding once the cell is assembled. Said sealing means advantageously is of an electrically isolating material.

Besides a cambered area 350 each flow-field plate may optionally exhibit a flat circumferential boundary area 360a and 360b respectively. Said circumferential boundary area may be of particular use when assembling the cell, i.e. for clamping the cell parts together. In one embodiment both flow-field plates comprise a circumferential boundary area 360a, 360b respectively, wherein the width of the boundary area may be the same. In an alternative embodiment, as depicted in the figure, the cambered areas 350a and 350b may have the same dimensions, whereas the circumferential area 360b of one of the flow-field plates, i.e. of flow-field plate 310b in fig. 3a, may have a significantly wider extension.

Figure 3b depicts the fuel cell 300 in its assembled state, i.e. wherein flow-field plates 310a, 310b at their circumferential boundary areas are mechanically clamped.

In this state the flow-field plates essentially do not show a curvature any more but apply a contact pressure on gas diffusion layers 330a and 330b respectively. In particular channel sidewalls 311 a and 311 b, i.e. the front face of the channels sidewalls, are pressed on the gas diffusion layers thus preventing the flow of the gasiform fuel or oxidant to shortcut the way through the flow-field channels. As explicated above said pressure also enables or improves the electrical and thermal connection of the flow-field plates 310a, 310b to membrane 320 in order enable a flow of electrical current and for dissipating thermal heat produced when operating the cell.

Hence, the fuel or reformer cell comprises at least one flow-field plate exhibiting a cambering in its relaxed condition for producing a contact pressure when assembled in said cell.

In order to prevent an electrical shortcut between the flow-field plates, which in this depicted embodiment also serve as electrodes, and for sealing the inner volume of the cell against a surrounding atmosphere at least one electrical isolator 340a, b and/or 370 may separate the flow-field plates in the assembled state.

Note that fig. 3b shows one of a plurality of possible solutions for clamping the flow-field plates 310a and 310b together, wherein all solutions have in common, that the clamping force is applied to the circumferential boundary area of the flow-field plates. In the depicted embodiment the boundary areas of the opposing flow-field plates are not identical, but the boundary area 360b of plate 310b is wider. For mechanically clamping the flow-field plates, said boundary area 360b is flanged or crimped, such that it encompasses the boundary area 360a of plate 310a at least partially, wherein the plates are isolated for example by isolator 370.

In an alternative embodiment, which is not shown in the figures, the boundary areas 360a, 360b of the two opposing flow-field plates may have the same width. For clamping the plates together an additional clamp is used, wherein the clamp jaws attach to the boundary areas thus pulling these together. Said additional clamp may be either of electrically isolating material or an isolating layer may be applied to electrically isolate the flow-field plates from each other.

In this way the cambering of the flow-field plates applies a contact pressure on the gas diffusion layer, wherein the amount of applied pressure may be adjusted by the amount of cambering. Accordingly there is no need for applying said contact pressure from outside of the cell. A single fuel cell is thus ready for operation without being mounted in a stack of fuel cells for applying said pressure.

## Claims

1. Fuel or reformer cell (300) comprising at least one flow-field plate (310a) exhibiting a cambering in its relaxed condition for producing a contact pressure between the flow-field plate and a gas diffusion layer when assembled in said cell (300)
**characterized in that**
the flow-field plate (310a) exhibits meandering flow-field channels (220) and in its relaxed condition a non-cambered circumferential boundary area (360a), each flow-field channel (220) having one dedicated inlet opening (210) and one dedicated outlet opening (230).

2. Fuel or reformer cell (300) of claim 1 wherein the flow-field plate (310a) exhibits inlet and outlet openings (210, 230) for supplying and draining off fuel or oxidant.

3. Fuel or reformer cell (300) of any preceding claim, wherein the flow-field plate (310a) serves as either cathode or anode.

4. Fuel or reformer cell (300) of any preceding claim, further comprising a second flow-field plate (310b) exhibiting a cambering in its relaxed condition for producing a contact pressure when assembled in said cell (300),

5. Fuel or reformer cell (300) of claim 4, wherein the flow-field plates (310a, 310b) are clamped together at their circumferential boundary areas (360a, 360b).

6. Fuel or reformer cell of claim 5, wherein both flow-field plates (310a, 310b) exhibit a circumferential boundary area (360a, 360b), wherein the circumferential boundary areas are of different width.

7. Fuel or reformer cell (300) of claim 6, wherein the boundary area (360b) of one of the flow-field plates is crimped or spun over to encompass the boundary area (360a) of the residual flow-field plate (310a).

## Patentansprüche

1. Brennstoff- oder Reformerzelle (300), die wenigstens eine Strömungsfeldplatte (310a) umfasst, die in ihrem entspannten Zustand eine Wölbung zum Erzeugen eines Kontaktdrucks zwischen der Strömungsfeldplatte und einer Gasdiffusionsschicht zeigt, wenn sie in der Zelle (300) montiert ist,
**dadurch gekennzeichnet, dass**
die Strömungsfeldplatte (310a) mäandernde Strömungsfeldkanäle (220) und in ihrem entspannten Zustand einen nicht gewölbten Umfangsbegrenzungsbereich (360a) zeigt, wobei jeder Strömungsfeldkanal (220) eine dedizierte Einlassöffnung (210) und eine dedizierte Auslassöffnung (230) aufweist.

2. Brennstoff- oder Reformerzelle (300) nach Anspruch 1, wobei die Strömungsfeldplatte (310a) Einlass- und Auslassöffnungen (210, 230) zum Zuführen und Abführen von Brennstoff oder Oxidans zeigt.

3. Brennstoff- oder Reformerzelle (300) nach einem der vorhergehenden Ansprüche, wobei die Strömungsfeldplatte (310a) entweder als Kathode oder als Anode dient.

4. Brennstoff- oder Reformerzelle (300) nach einem der vorhergehenden Ansprüche, die ferner eine zweite Strömungsfeldplatte (310b) umfasst, die in ihrem entspannten Zustand eine Durchbiegung zum Erzeugen eines Kontaktdrucks zeigt, wenn sie in der Zelle (300) montiert ist.

5. Brennstoff- oder Reformerzelle (300) nach Anspruch 4, wobei die Strömungsfeldplatten (310a, 310b) in ihren Umfangsbegrenzungsbereichen (360a, 360b) zusammen geklemmt sind.

6. Brennstoff- oder Reformerzelle nach Anspruch 5, wobei beide Strömungsfeldplatten (310a, 310b) einen Umfangsbegrenzungsbereich (360a, 360b) zeigen, wobei die Umfangsbegrenzungsbereiche von unterschiedlicher Breite sind.

7. Brennstoff- oder Reformerzelle (300) nach Anspruch 6, wobei der Begrenzungsbereich (360b) einer der Strömungsfeldplatten gefalzt oder gepresst ist, um den Begrenzungsbereich (360a) der verbleibenden Strömungsfeldplatte (310a) zu umgeben.

## Revendications

1. Cellule à combustible ou de reformage (300), comprenant au moins une plaque (310a) de champ d'écoulement qui présente à l'état relaxé une voûte qui exerce une poussée de contact entre la plaque de champ d'écoulement et une couche de diffusion de gaz après montage dans ladite cellule (300),
**caractérisée en ce que**
la plaque (310a) de champ d'écoulement présente des canaux (220) de champ d'écoulement en méandres et une bordure périphérique (360a) non bombé à l'état relaxé et
**en ce que** chaque canal (220) de champ d'écoulement présente une ouverture d'entrée propre (210) et une ouverture de sortie propre (230).

2. Cellule à combustible ou de reformage (300) selon la revendication 1, dans laquelle la plaque (310a) de champ d'écoulement présente une ouverture d'entrée et une ouverture de sortie (210, 230) qui délivrent et évacuent un combustible ou un oxydant.

3. Cellule à combustible ou de reformage (300) selon l'une quelconque des revendications précédentes, dans laquelle la plaque (310a) à champ d'écoulement sert de cathode ou d'anode.

4. Cellule à combustible ou de reformage (300) selon l'une quelconque des revendications précédentes, comprenant en outre une deuxième plaque (310b) à champ d'écoulement présentant à l'état relaxé une cambrure qui exerce une poussée de contact après montage dans ladite cellule (300).

5. Cellule à combustible ou de reformage (300) selon la revendication 4, dans laquelle les plaques (310a, 310b) de champ d'écoulement sont pincées ensemble sur leur bordure périphérique (360a, 360b).

6. Cellule à combustible ou de reformage selon la revendication 5, dans laquelle les deux plaques (310a, 310b) de champ d'écoulement présentent une bordure périphérique (360a, 360b), les bordures périphériques présentant des largeurs différentes.

7. Cellule à combustible ou de reformage (300) selon la revendication 6, dans laquelle la bordure (360b) de l'une des plaques de champ d'écoulement est sertie ou rabattue de manière à englober la bordure (360a) de l'autre plaque (310a) de champ d'écoulement.
